Europäisches Patentamt

European Patent Office

Office européen des brevets

(19)

(11) EP 0 561 723 B1

(12) FASCICULE DE BREVET EUROPEEN

(45) Date de publication et mention
de la délivrance du brevet:
**13.01.1999  Bulletin 1999/02**

(51) Int Cl.[6]: **F27D 17/00**, F27D 19/00,
C21C 5/52

(21) Numéro de dépôt: **93470004.8**

(22) Date de dépôt: **19.02.1993**

(54) **Procédé et dispositif de régulation du débit d'air de post combustion d'un dispositif de captage des fumées d'un réacteur métallurgique**

Verfahren und Vorrichtung zur Regelung der Luftmenge bei der Nachverbrennung in einem Abgassammler eines metallurgischen Reaktors

Process and installation for post combustion air flow rate regulation of a metallurgical reactor fume collecting device

(84) Etats contractants désignés:
**AT BE CH DE DK ES GB GR IE IT LI LU NL PT SE**

(30) Priorité: **16.03.1992  FR 9203108**

(43) Date de publication de la demande:
**22.09.1993  Bulletin 1993/38**

(73) Titulaire: **UNIMETAL**
**57120 Rombas (FR)**

(72) Inventeurs:
• **Bernet, Thierry**
**F-57070 Metz (FR)**
• **Dusser, Hervé**
**F-57000 Metz (FR)**

• **Fiorelli, Sylvain**
**F-57000 Metz (FR)**
• **Pernet, Daniel**
**F-57070 Metz (FR)**

(74) Mandataire: **Ventavoli, Roger**
**TECHMETAL PROMOTION**
**Domaine de l'IRSID**
**Immeuble Pacific**
**11-13, cours Valmy**
**La Défense 7 - TSA 10001**
**92070 PARIS LA DEFENSE CEDEX (FR)**

(56) Documents cités:
**EP-A- 0 026 118          FR-A- 1 433 994**
**FR-A- 1 532 756**

EP 0 561 723 B1

## Description

L'invention est relative à la régulation du débit d'air de combustion de la chambre de combustion d'un dispositif d'évacuation des fumées d'un réacteur métallurgique, notamment d'un four à arc électrique.

Comme le montre par exemple les documents EP-A-0 026 118 ou FR-A-1 532 756, les réacteurs métallurgiques, et en particulier les fours à arc électrique destinés à la fabrication d'acier par fusion des ferrailles, sont équipés d'un dispositif d'évacuation des fumées comprenant, en série, une canalisation de captage, une chambre de combustion, une canalisation d'évacuation qui débouche sur un dépoussiérage et une cheminée. La chambre de combustion a pour fonction de compléter la combustion des gaz contenus dans les fumées issues du four. En effet, ceux-ci contiennent des gaz incomplètement brûlés, par exemple du monoxyde de carbone, qu'il faut brûler complètement afin de les transformer en gaz inerte pour éviter tout risque de combustion intempestive ou d'explosion dans la partie aval du circuit d'évacuation des fumées.

Dans le cas des fours à arc habituels, un système de captage-combustion tel que décrit dans le document EP-A-0026118 précité peut parfaitement convenir à cette fin. Ce système est basé sur deux régulations indépendantes successives : la première, au niveau du four, pilote la pression dans l'enceinte de celui-ci pour la maintenir en surpression permanente quelque soit le volume instantané de gaz produit. L'autre, au niveau de la ligne de captage, pilote le débit d'air à introduire dans la chambre de combustion pour y assurer, avec un dégré voulu, la combustion des gaz émis hors du four. Le tout peut alors fonctionner sans la présence du gap habituel entre la sortie «gaz» du four et l'entrée de la ligne de captage de manière à éviter d'avoir à véhiculer des quantités énormes d'air de dillution et donc de devoir surdimensionner l'installation de captage par rapport aux quantités de gaz à traiter.

Un tel système s'avère en fait sans grand intérêt dans le cas des fours à arcs modernes, dit «étanches», puisque par définition les risques d'entrée d'air parasite dans l'enceinte du four sont quasi supprimés.

On rappelle qu'on entend par four «étanche», les fours électriques habituels qui ont été aménagés de façon à améliorer leur étanchéité à l'égard de l'atmosphère ambiante au niveau de la porte de décrassage, du joint de voûte et des orifices de passage des électrodes.

En règle générale, la chambre de combustion est alimentée en air de combustion sous un débit régulé à partir d'une mesure de teneur en oxygène faite à la sortie de la chambre de combustion. On impose que cette teneur en oxygène soit supérieure à une valeur minimale de façon à garantir la combustion complète des gaz.

Dans les fours à arcs étanches, cette technique présente un inconvénient car, suite à une production rapide de bouffées de monoxyde de carbone, la régulation, se faisant par mesure après la chambre de combustion, n'est peut-être pas assez rapide pour assurer une combustion complète des gaz produits.

L'invention a pour but d'apporter une réponse au problème du captage-combustion sur four étanche en proposant un procédé de régulation de l'air de combustion de la chambre de combustion d'un dispositif d'évacuation des fumées d'un réacteur métallurgique qui réagisse rapidement aux régimes transitoires.

A cet effet, l'invention a pour objet un procédé de régulation du débit d'air de combustion de la chambre de combustion d'un dispositif de captage de fumées d'un réacteur métallurgique, notamment d'un four à arc électrique, du type comprenant une canalisation de captage, une chambre de combustion, une alimentation en air de combustion à débit variable munie d'une régulation de débit et une canalisation d'évacuation, selon lequel :

- on fixe une valeur de consigne $C_0$ pour la teneur en oxygène dans les fumées dans la canalisation d'évacuation à la sortie de la chambre de combustion,
- on mesure la teneur en oxygène $M_1$ dans les fumées à la sortie de la chambre de combustion, dans la canalisation,
- à l'aide de la mesure $M_1$ et de la consigne $C_0$, on calcule une consigne $C_1$ de variation du débit d'air de combustion qui tend à ajuster le débit d'air de combustion de façon à ce que la teneur en oxygène des fumés à la sortie de la chambre de combustion soit égale à $C_0$, procédé caractérisé en ce que l'on mesure en outre au moins une grandeur qui permet de détecter une variation brutale de débit de gaz imbrûlés à la sortie du réacteur métallurgique et on calcule une consigne $C_2$ de débit d'air de combustion nécessaire pour obtenir au moins la combustion complète des gaz imbrûlés contenus dans les fumées, et en ce que l'on ajoute les consignes $C_1$ et $C_2$ pour obtenir une consigne $C_3$ qu'on envoie à la régulation du dispositif d'alimentation en air de combustion.

Dans un premier mode de réalisation la grandeur permettant de détecter une variation brutale du débit de gaz imbrûlés à la sortie du réacteur métallurgique est l'écart $M_5$ de pression existant entre l'intérieur et l'extérieur du réacteur métallurgique, la consigne $C_2$ se détermine alors en calculant la dérivée par rapport au temps de l'écart $M_5$, si cette dérivée est inférieure à un seuil critique $s_c$, la consigne $C_2$ est nulle, si la dérivée $M_5$ est supérieure au seuil critique $s_c$, la consigne $C_2$ est égale à k x $M_5$ ; $s_c$ et k ont des valeurs déterminées expérimentalement pour chaque réacteur.

Dans un deuxième mode de réalisation, la grandeur permettant de détecter une variation brutale de débit de gaz imbrûlés à la sortie du réacteur métallurgique est la teneur $M_2$ exprimée en % en gaz incomplètement brûlés dans les fumées à la sortie du réacteur métallurgique dans la canalisation de captage et pour déterminer la consigne $C_2$ on

<div align="center">2</div>

utilise des seuils $s_1 s_2, ..., s_n$ échelonnés entre 0% et 100% et des impulsions d'amplitude $a_1, a_2, ..., a_N$ et de durée $t_1$, $t_2, ..., t_n$, lorsque la mesure $M_2$ est comprise entre $s_i$ et $s_{i+1}$, on émet une impulstion d'amplitude $a_i$ et de durée $T_i$ et on ajoute les impulsions ainsi émises.

Dans un troisième mode de réalisation, pour déterminer la consigne $C_2$ de débit d'air de combustion,

- on mesure la teneur $M_2$ en gaz incomplètement brûlé dans les fumées à la sortie du réacteur métallurgique dans la canalisation de captage,
- on mesure le débit $M_3$ d'air de combustion à la sortie de l'alimentation en air de combustion,
- on mesure le débit $M_4$ de fumée dans la canalisation d'évacuation à la sortie de la chambre de combustion ;
- à l'aide des mesure $M_1$, $M_2$, $M_3$, $M_4$ et de la consigne $C_0$, on calcule la consigne $C_2$ de débit d'air de combustion correspondant au débit d'air nécessaire pour obtenir la combustion complète des gaz imbrûlés contenus dans les fumées et pour avoir en sortie de la chambre de combustion une teneur en oxygène dans les fumées égale à $C_0$.

Dans ce cas, pour calculer la consigne $C_2$, on calcule le débit de fumées à la sortie du four soit par la formule approchée :

$$q_f = \left(1 - \frac{C_0}{100}\right) \times M_4 - 0{,}8 \times M_3$$

soit par la formule plus précise :

$$q_f = \left(1 - \frac{M_1}{100}\right) \times M_4 - 0{,}8 \times M_3$$

puis on calcule le débit d'oxygène nécessaire

$$q_{02} = \alpha q_f \times \frac{M_2}{100} + \frac{C_0}{100} M_4$$

où $\alpha$ est un coefficient stoechiométrique égal à 0,5 lorsque le gaz imbrûlé est du monoxyde de carbone, et on calcule la consigne $C_2$ de débit d'air de combustion

$$C_2 = q_{0,2} \times \frac{1}{0{,}2}$$

L'invention a également pour objet un dispositif de régulation du débit de l'alimentation en air de combustion de la chambre de combustion d'un ensemble d'évacuation des fumées d'un réacteur métallurgique, notamment d'un four à arc électrique comprenant une canalisation de captage des fumées branchée sur le réacteur métallurgique, une chambre de combustion recevant les fumées provenant de la canalisation de captage et alimentée en air de combustion par un organe d'alimentation muni d'une régulation de débit pouvant recevoir sur une entrée une consigne extérieure, un moyen de mesure de la teneur en oxygène dans les fumées dans la canalisation d'évacuation à la sortie de la chambre de combustion relié à une autre entrée de ladite régulation de débit, une canalisation d'évacuation des fumées montée en série sur la chambre de combustion, dispositif caractérisé en ce qu'il comporte :

- un moyen de mesure de la teneur en gaz incomplètement brûlé à la sortie du réacteur métallurgique avant l'entrée dans la chambre de combustion, - et un moyen électronique de calcul et de régulation relié aux moyens de mesure de la teneur en oxygène et de mesure de teneur en gaz incomplètement brûlés et à la régulation de débit du dispositif d'alimentation en air de combustion.

et en ce que ledit organe d'alimentation en air de combustion est un dispositif d'apport d'air, tel qu'un ventilateur.

Préférentiellement, le dispositif comprend en outre :

- un moyen de mesure de débit des fumées dans la canalisation d'évacuation à la sortie de la chambre de combustion,

- un moyen de mesure du débit d'air de combustion à la sortie du dispositif d'alimentation en air de combustion, lesdits moyens étant reliés au moyen électronique de calcul et de régulation.

Dans un mode de réalisation particulier, le moyen électronique de calcul et de régulation comporte un régulateur PID, un calculateur électronique et un sommateur.

Les moyens de mesure de débit des fumées ou de l'air de combustion peuvent être constitués de tubes de Pitot.

Lorsque le gaz imbrûlé contenu dns les fumées est du monoxyde de carbone, le moyen de mesure de la teneur en gaz imbrûlés est par exemple un détecteur à absorption de rayonnement infrarouge.

L'invention concerne également un dispositif de régulation du débit de l'alimentation en air de combustion de la chambre de combustion d'un ensemble d'évacuation des fumées d'un réacteur métallurgique notamment d'un four à arc électrique étanche comprenant une canalisation de captage des fumées branchée sur le réacteur métallurgique, une chambre de combustion recevant les fumées provenant de la canalisation de captage et alimentée en air de combustion par un organe d'alimentation muni d'une régulation de débit pouvant recevoir sur une entrée une consigne extérieure, un moyen de mesure de la teneur en oxygène dans les fumées dans la canalisation d'évacuation à la sortie de la chambre de combustion relié à une autre entrée de la régulation de débit, un moyen de mesure de l'écart de pression entre l'extérieur et l'intérieur de l'enceinte du réacteur métallurgique, et une canalisation d'évacuation des fumées montée en série sur la chambre de combustion, dispositif caractérisé en ce qu'il comporte en outre un moyen électronique de calcul et de régulation relié aux moyens de mesure de la teneur en oxygène et d'écart de pression et relié également à la régulation de débit du dispositif d'alimentation en air de combustion, et en ce que ledit organe d'alimentation en air de combustion est un dispositf d'apport d'air, tel qu'un ventilateur.

De préférence, le moyen de mesure de la teneur en oxygène est une pile au zircone.

L'invention concerne aussi un dispositif de captage des fumées d'un réacteur métallurgique du type comprenant une canalisation de captage, une chambre de combustion munie d'un organe d'alimentation en air de combustion et une canalisation d'évacuation des fumées, caractérisé en ce qu'il est muni d'un dispositif de régulation du débit de l'organe d'alimentation d'air de combustion selon l'invention.

Elle concerne également un réacteur métallurgique équipé d'un tel dispositif ; ce réacteur métallurgique peut être un four électrique.

L'invention va maintenant être décrite plus en détail en regard des figures annexées dans lesquelles :

- la figure 1 représente un schéma d'un dispositif de captage des gaz et fumées d'un four électrique muni d'une régulation selon un premier mode de réalisation de l'invention,
- la figure 2 représente un schéma d'un dispositif de captage des gaz et fumées d'un four électrique muni d'une régulation selon un deuxième mode de réalisation de l'invention,
- la figure 3 représente un schéma d'un dispositif de captage des gaz et fumées d'un four électrique muni d'une régulation selon un troisième mode de réalisation de l'invention.

L'ensemble de captage des gaz et fumées d'un four électrique 2 à arc, repéré généralement par 1, comporte une canalisation 3 de captage, une chambre de combustion 4 et une canalisation 5 d'évacuation des fumées. La canalisation 3 de captage, la chambre de combustion 4 et la canalisation 5 d'évacuation sont montées en série. L'extrémité libre de la canalisation 3 de captage est en regard d'une tubulure 6 placée sur la voûte 7 du four 2 qui met en communication l'intérieur 8 du four 2 avec la canalisation 3. La canalisation 5 d'évacuation est branchée sur un dispositif non représenté d'épuration des fumées complété par une cheminée non représentée. La chambre de combustion 4 est alimentée en air de combustion par un ventilateur 9. Le ventilateur 9 est muni d'une régulation de débit pouvant recevoir une consigne de débit provenant de l'extérieur.

Lors de l'élaboration d'acier dans le four 2, des fumées contenant notamment du monoxyde de carbone sont générées dans l'enceinte 8 du four. Ces fumées passent par la tubulure 6 puis par la canalisation 3 de captage et arrivent dans la chambre de combustion où elles sont mélangées avec de l'air fourni par le ventilateur 9. Dans la chambre de combustion 4, le monoxyde de carbone brûle et se transforme en dioxyde de carbone qui est un gaz inerte. Les fumées sont alors évacuées par la canalisation 5 d'évacuation.

Il est important que la combustion du monoxyde de carbone soit complète afin d'éviter tout risque de combustion ou d'explosion en aval de la chambre de combustion.

Pour s'assurer que cette combustion est complète, on impose que la teneur en oxygène des fumées dans la canalisation 5 d'évacuation, à la sortie de la chambre de combustion soit supérieure à une valeur de consigne $C_0$ fixée par exemple à 10% et on régule le débit d'air de combustion de la chambre de combustion pour que cette condition soit réalisée sans toutefois que le débit d'air de combustion soit trop important afin de ne pas engorger le dispositif d'évacuation des fumées situé en aval de la chambre de combustion.

Cette régulation du débit d'air de combustion est nécessaire car le débit de fumées et la teneur en monoxyde de carbone de celles-ci ne sont pas constants tout au long d'une opération d'élaboration d'acier. En particulier, lors de l'affalage de la charge de ferrailles dans le bain d'acier liquide ou lors de la phase de décarburation, il y a accroissement subit et important de la quantité de fumées produites et de la teneur en monoxyde de carbone de ces fumées.

Pour assurer cette régulation on tient compte d'une part des variations de teneur en oxygène dans les fumées à la sortie de la chambre de combustion 4, d'autre part des variations plus ou moins rapides de débit de gaz imbrûlés à la sortie du four 2.

La prise en compte de la teneur en oxygène en sortie de la chambre de combustion conduit à déterminer une première consigne $C_1$ de débit pour le ventilateur 9.

La prise en compte du débit de gaz imbrûlés à la sortie du four conduit à déterminer une consigne $C_2$ de débit pour le ventilateur 9. En additionnant C1 et $C_2$ on obtient une consigne $C_3$ qu'on envoie à la régulation de débit du ventilateur.

Pour déterminer la consigne $C_1$ de débit, à l'aide d'un analyseur 10 d'oxygène à pile au zircone ayant un temps de réponse inférieur à 10 s et placé dans la canalisation 5 d'évacuation, on mesure la teneur $M_1$ en oxygène des fumées à la sortie de la chambre de combustion 4 ; $M_1$ est exprimé en %. A l'aide d'une régulation électronique 16 proportionnelle, intégrale, différentielle (PID) on compare $M_1$ à une consigne $C_0$ de teneur en oxygène souhaitée dans les fumées et on élabore $C_1$ envoyée à un sommateur 15.

Pour élaborer la consigne $C_2$ de débit, plusieurs modes de réalisation sont possibles.

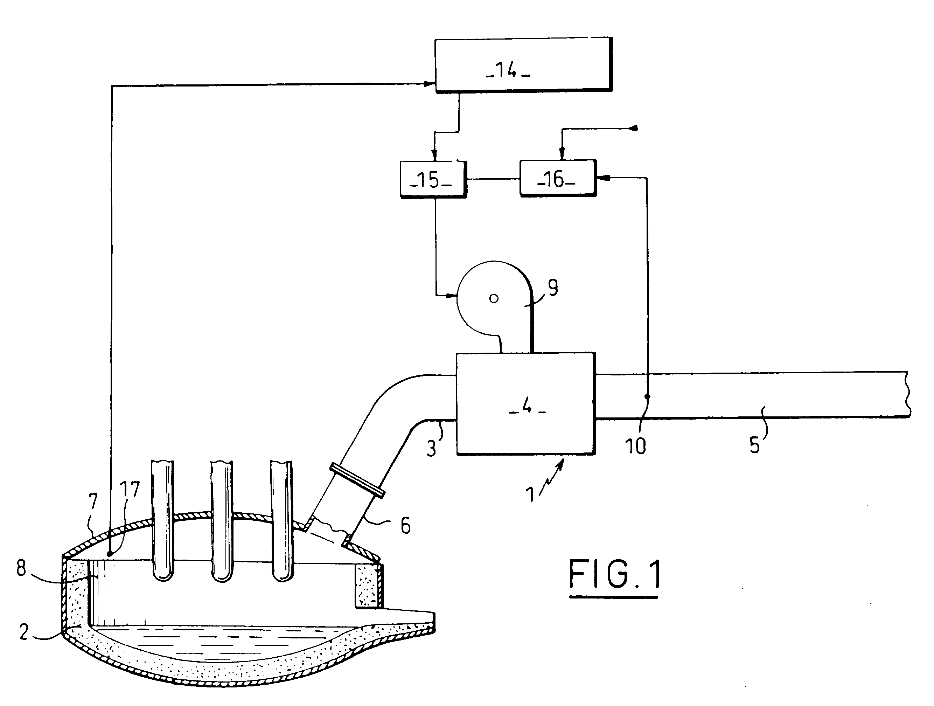

Dans un premier mode de réalisation (figure 1) on mesure, grâce à un moyen 17 de mesure de pression, l'écart de pression $M_5$ qui règne entre l'intérieur et l'extérieur de l'enceinte du four 2.

A l'aide d'un dispositif électronique 14, on calcule la dérivée par rapport au temps $\frac{dM_5}{dt}$ de $M_5$ et on compare cette dérivée à un seuil s. Si $\frac{dM_5}{dt} \langle$ s, on fixe $C_2$ à 0, si $\frac{dM_5}{dt} \rangle$ s, on fixe $C_2$ à une valeur telle que : $C_2 = k \times M_5$. En effet, lorsque la production de gaz imbrûlés dans le four augmente, la pression à l'intérieur du four augmente et le débit de gaz imbrûlés à la sortie du four est à peu près proportionnelle à l'écart de pression entre l'extérieur et l'intérieur du four. Le calcul de dérivée permet de détecter une variation rapide de cette différence de pression associée à une variation brutale de production de gaz.

La consigne $C_2$ est envoyée à un sommateur 15 qui élabore la consigne $C_3 = C_1 + C_2$ et qui envoie cette consigne à la régulation de débit du ventilateur 9.

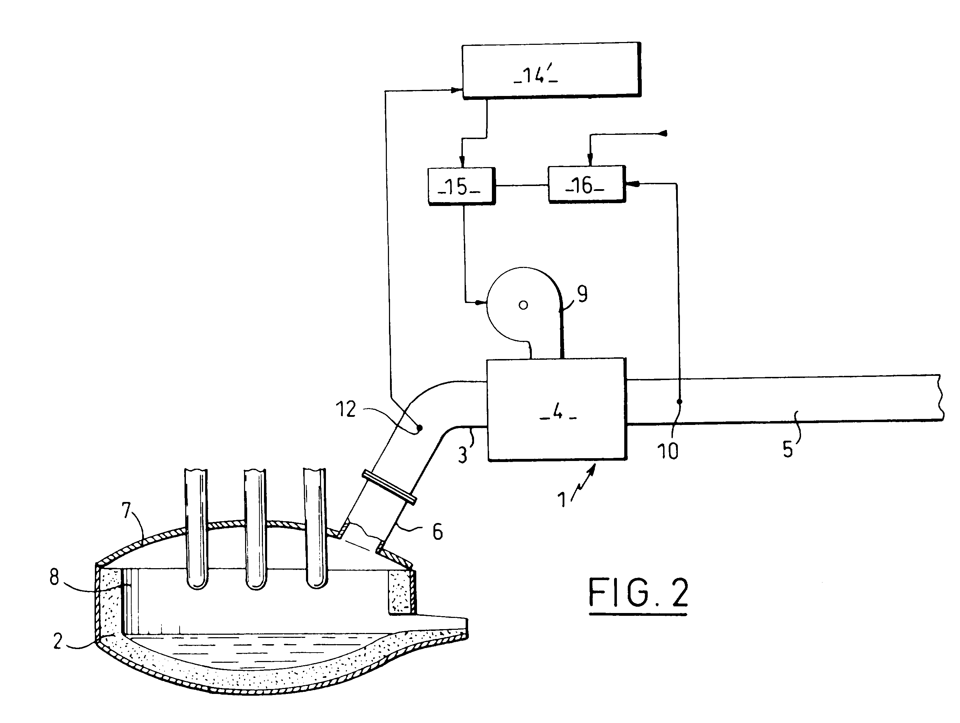

Dans un deuxième mode de réalisation (figure 2), la consigne $C_2$ est élaborée à partir d'une mesure $M_2$ de la teneur en monoxyde de carbone des fumées à la sortie du four 2 à arc électrique ; $M_2$ est exprimé en %.

$M_2$ est mesuré à l'aide d'un analyseur 12 de monoxyde de carbone à absorption de rayonnement infrarouge ayant un temps de réponse inférieur à 10 s et placé dans la canalisation 3 de captage, à proximité de la tubulure 6. La mesure $M_2$ est envoyée à des moyens électroniques 14' qui comparent $M_2$ à des seuils $S_1$, $S_2$, ..., Sn échelonnés entre 0 % et 100 %. Lorsque $S_i < M_2 < S_{i+1}$, le moyen électronique 14' génère un signal en créneau d'amplitude $a_i$ et de durée $t_i$ ; la suite $a_1$, $a_2$, ..., $a_n$ est croissante, de même que la suite $t_1$, $t_2$, ..., $t_n$.

Les différents créneaux générés sont superposés de façon à élaborer la consigne $C_2$ qui est alors envoyée au sommateur 15 où elle est additionnée à la consigne $C_1$ provenant du moyen électronique 16 recevant le signal de l'analyseur 10 pour constituer la consigne $C_3$ qui est envoyée à la régulation de débit du ventilateur 9.

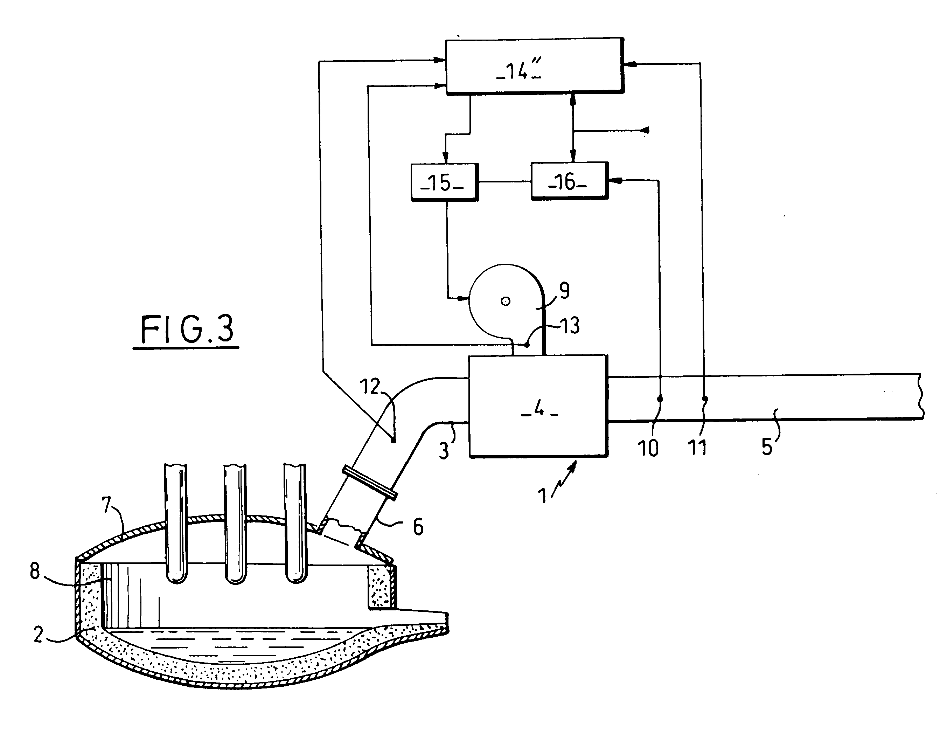

Dans un troisième mode de réalisation (figure 3), la consigne $C_2$ est élaborée à l'aide :

- de la mesure $M_1$ de teneur en oxygène des fumées à la sortie de la chambre de combustion 4 (analyseur 10)
- de la mesure $M_2$ de teneur en gaz imbrûlés à la sortie du four (analyseur 12)
- d'une mesure $M_3$ de débit d'air de combustion envoyé dans la chambre de combustion et réalisée à l'aide de sondes 13 à tubes de Pitot placées à la sortie du ventilateur 9,
- d'une mesure $M_4$ de débit des fumées dans la canalisation 5 d'évacuation réalisée à l'aide d'une sonde 11 à tubes de Pitot placée dans la canalisation 5.

A l'aide d'un calculateur électronique 14" on calcule $C_2$ à partir de $M_1$, $M_2$, $M_3$, $M_4$ et $C_0$. Cette consigne $C_2$ est envoyée au sommateur 15 qui l'additionne à la consigne $C_1$ et délivre une consigne $C_3 = C_1 + C_2$ envoyée à la régulation de débit du ventilateur 9.

Pour déterminer $C_2$, on calcule :

- le débit $q_f$ des fumées à la sortie du four :

$$q_f = \left(1 - \frac{C_0}{100}\right) \times M_4 - 0{,}8 \times M_3 \qquad (C_0 \text{ exprimé en } \%)$$

Cette formule est approchée car on utilise $C_0$ comme teneur en oxygène ; elle peut être remplacée par une formule plus exacte :

$$q_f = \left(1 - \frac{M_1}{100}\right) \times M_4 - 0.8 \times M_3$$

- le débit $q_{02}$ d'oxygène nécessaire pour brûler tout le monoxyde de carbone et pour avoir une teneur en oxygène des fumées égale à $C_0$ :

$$q_{02} = \left(\alpha \, q_f \times \frac{M_2}{100} + \frac{C_0}{100} M_4\right) \qquad (M_2 \text{ en } \%)$$

$\alpha$ est un coefficient stoechiométrique qui dépend de la nature du gaz à brûler ; dans le cas du monoxyde de carbone $\alpha = 0.5$ on en déduit la consigne $C_2$ de débit pour le ventilateur, en tenant compte de la proportion d'oxygène dans l'air :

$$C_2 = \frac{q_{02}}{0.2}$$

Le fonctionnement est le suivant :

- en régime quasi stationnaire d'émission de fumée par le four, les mesures de teneur en monoxyde de carbone et de débit de fumée n'indiquent pas de variations significatives ; si la mesure de teneur en oxygène indique un écart par rapport à la consigne, le régulateur envoie au ventilateur une consigne de débit qui tend à ramener la teneur en oxygène à la valeur de consigne ;
- en régime transitoire, lors par exemple d'une émission brutale et importante de monoxyde de carbone, le calcul fait à partir des mesures de teneur en monoxyde de carbone, de débit de fumée et de débit d'air de combustion, génère une augmentation de la consigne de débit en air de combustion qui est prise en compte par la régulation du ventilateur avant que la chambre de combustion soit saturée en monoxyde de carbone ; si l'air de combustion est en excédent, la mesure de teneur en oxygène envoyée à la régulation 16 génère une consigne de correction qui tend à ajuster le débit d'air de combustion à la valeur juste nécessaire.

Ainsi ce procédé de régulation permet de bien contrôler la teneur en oxygène dans les fumées en sortie de la chambre de combustion même pour les régimes transitoires rapides. Ceci permet d'assurer que tout le monoxyde de carbone est brûlé.

On remarquera que ce procédé peut s'appliquer à tout réacteur métallurgique produisant des fumées contenant un gaz combustible qu'on veut faire brûler et dont on veut contrôler la combustion.

On notera également que l'air de combustion peut être apporté par un ventilateur ou tout autre dispositif et que la régulation de débit d'air du ventilateur peut être faite soit en agissant sur la vitesse de rotation du ventilateur soit en utilisant d'autres moyens tels que des ventelles.

Les moyens de mesure peuvent également être autres que ceux décrits. Tout moyen d'analyse en oxygène ou en monoxyde de carbone et tout moyen de mesure du débit peuvent être utilisés pourvu qu'ils aient un temps de réponse suffisamment court.

Le gaz incomplètement brûlé contenu dans les fumées à la sortie du four peut être un autre gaz que le monoxyde de carbone. Ce peut être par exemple de l'hydrogène ou un autre gaz susceptible de subir une combustion.

Enfin, les différentes mesures peuvent être envoyées à un calculateur électronique unique qui élabore directement la consigne $C_3$ et l'envoie à la régulation du dispositif d'alimentation en air de combustion.

**Revendications**

1. Procédé de régulation du débit d'air de combustion de la chambre de combustion (4) d'un dispositif (1) de captage des fumées d'un réacteur métallurgique, notamment d'un four (2) à arc électrique, du type comprenant une canalisation (3) de captage, une chambre de combustion (4), une alimentation (9) en air de combustion à débit variable munie d'une régulation de débit et une canalisation (5) d'évacuation, selon lequel :

- on fixe une valeur de consigne $C_0$ pour la teneur en oxygène dans les fumées dans la canalisation (5) d'évacuation à la sortie de la chambre de combustion (4),
- on mesure la teneur en oxygène $M_1$ dans les fumées à la sortie de la chambre de combustion (4), dans la canalisation (5),
- à l'aide de la mesure $M_1$ et de la consigne $C_0$, on calcule une consigne $C_1$ de variation du débit d'air de combustion qui tend à ajuster le débit d'air de combustion de l'alimentation (9) de façon à ce que la teneur en oxygène des fumées à la sortie de la chambre de combustion (4) soit égale à $C_0$, procédé caractérisé :
- en ce que l'on mesure en outre au moins une grandeur qui permet de détecter une variation brutale de débit de gaz imbrûlés à la sortie du réacteur métallurgique et on calcule une consigne $C_2$ de débit d'air de combustion nécessaire pour obtenir au moins la combustion complète des gaz imbrûlés contenus dans les fumées,
- et en ce que l'on ajoute les consignes $C_1$ et $C_2$ pour obtenir une consigne $C_3$ qu'on envoie à la régulation du dispositif (9) d'alimentation en air de combustion.

2. Procédé selon la revendication 1, caractérisé en ce que la grandeur permettant de détecter une variation brutale du débit de gaz imbrûlés à la sortie du réacteur métallurgique est l'écart $M_5$ de pression existant entre l'intérieur et l'extérieur du réacteur métallurgique, la consigne $C_2$ se déterminant alors en calculant la dérivée par rapport au temps de l'écart $M_5$, si cette dérivée est inférieure à un seuil critique $s_c$, la consigne $C_2$ est nulle, si la dérivé de $M_5$ est supérieure au seuil critique $s_c$, la consigne $C_2$ est égale à $k \times M_5$, $s_c$ et $k$ ayant des valeurs déterminées expérimentalement pour chaque réacteur.

3. Procédé selon la revendication 1, caractérisé en ce que la grandeur permettant de détecter une variation brutale de débit de gaz imbrûlés à la sortie du réacteur métallurgique est la teneur $M_2$ exprimée en % en gaz incomplètement brûlés dans les fumées à la sortie du réacteur métallurgique dans la canalisation de captage (3) et en ce que pour déterminer la consigne $C_2$ on utilise des seuils $s_1$, $s_2$, ..., $sn$ échelonnés entre 0% et 100% et des impulsions d'amplitude $a_1$, $a_2$, ..., $a_N$ et de durée $t_1$, $t_2$, ..., $t_n$, lorsque la mesure $M_2$ est comprise entre $s_i$ et $s_{i+1}$, on émet une impulstion d'amplitude $a_i$ et de durée $t_i$ et on ajoute les impulsions ainsi émises.

4. Procédé selon la revendication 1, caractérisé en ce que pour déterminer la consigne $C_2$ de débit d'air de combustion :

- on mesure la teneur $M_2$ en gaz incomplètement brûlé dans les fumées à la sortie du réacteur métallurgique dans la canalisation de captage (3),
- on mesure le débit $M_3$ d'air de combustion à la sortie de l'alimentation en air de combustion (9),
- on mesure le débit $M_4$ de fumée dans la canalisation (5) d'évacuation à a sortie de la chambre de combustion (4),
- à l'aide des mesure $M_1$, $M_2$, $M_3$, $M_4$ et de la consigne $C_0$, on calcule la consigne $C_2$ de débit d'air de combustion correspondant au débit d'air nécessaire pour obtenir la combustion complète des gaz imbrûlés contenus dans les fumées et pour avoir en sortie de la chambre de combustion une teneur en oxygène dans les fumées égale à $C_0$.

5. Procédé selon la revendication 4, caractérisé en ce que pour calculer la consigne C2, on calcule le débit de fumées à la sortie du four (2) soit par la formule approchée :

$$q_f = \left(1 - \frac{Co}{100}\right) \times M_4 - 0{,}8 \times M_3$$

soit par la formule plus précise :

$$q_f = \left(1 - \frac{M_1}{100}\right) \times M_4 - 0{,}8 \times M_3$$

puis on calcule le débit d'oxygène nécessaire

$$q_{02} = \alpha q_f \times \frac{M_2}{100} + \frac{C_0}{100} M_4$$

où $\alpha$ est un coefficient stoechiométrique égal à 0,5 lorsque le gaz imbrûlé est du monoxyde de carbone, et on calcule la consigne $C_2$ de débit d'air de combustion

$$C_2 = q_{02} \times \frac{1}{0,2}$$

6. Dispositif de régulation du débit de l'alimentation en air de combustion de la chambre de combustion (4) d'un ensemble (1) d'évacuation des fumées d'un réacteur métallurgique, notamment d'un four (2) à arc électrique comprenant une canalisation (3) de captage des fumées branchées sur le réacteur métallurgique, une chambre de combustion (4) recevant les fumées provenant de la canalisation (3) de captage et alimentée en air de combustion par un organe d'alimentation muni d'une régulation de débit pouvant recevoir sur une entrée une consigne extérieure, un moyen (10) de mesure de la teneur en oxygène dans les fumées dans la canalisation (5) d'évacuation à la sortie de la chambre de combustion relié à une autre entrée de ladite régulation de débit, une canalisation (5) d'évacuation des fumées montée en série sur la chambre de combustion, dispositif caractérisé en ce qu'il comporte en outre :

 - un moyen (12) de mesure de la teneur en gaz incomplètement brulés à la sortie du réacteur métallurgique avant l'entrée dans la chambre de combustion,
 - et un moyen électronique (14, 15, 16) de calcul et de régulation relié aux moyens (10, 12) de mesure de la teneur en oxygène, de la teneur en gaz incomplètement brûlés et à la régulation de débit du dispositif (9) d'alimentationen air de combustion,
 - et en ce que ledit organe d'alimentation de la chambre de combustion en air de combustion est un dispositif de soufflage d'air (9).

7. Dispositif selon la revendication 6, caractérisé en ce qu'il comprend en outre :

 - un moyen (11) de mesure de débit des fumées dans la canalisation (5) d'évacuation à la sortie de la chambre de combustion,
 - un moyen (13) de mesure du débit d'air de combustion à la sortie du dispositif d'alimentation en air de combustion,

lesdits moyens (11, 13) étant reliés au moyen électronique (14, 15, 16) de calcul et de régulation.

8. Dispositif selon l'une quelconque des revendications 6 et 7, caractérisé en ce que les moyens (11, 13) de mesure de débit des fumées et de l'air de combustion sont constitués par des tubes de Pitot.

9. Dispositif de régulation du débit de l'alimentation en air de combustion de la chambre de combustion (4) d'un ensemble (1) d'évacuation des fumées d'un réacteur métallurgique, notamment d'un four (2) à arc électrique, comprenant une canalisation (3) de captage des fumées branchée sur le réacteur métallurgique, une chambre de combustion (4) recevant les fumées provenant de la canalisation (3) de captage et alimentée en air de combustion par un organe d'alimentation muni d'une régulation de débit pouvant recevoir, sur une entrée, une consigne extérieure, un moyen (10) de mesure de la teneur en oxygène dans les fumées dans la canalisation (5) d'évacuation à la sortie de la chambre de combustion relié à une autre entrée de ladite régulation de débit, un moyen (17) de mesure de l'écart de pression entre l'extérieur et l'intérieur de l'enceinte (8) du réacteur métallurgique, et une canalisation (5) d'évacuation des fumées montée en série sur la chambre de combustion, dispositif caractérisé en ce qu'il comporte en outre un moyen électronique (14, 15, 16) de calcul et de régulation relié aux moyens (10, 17) de mesure de la teneur en oxygène et d'écart de pression et relié également à la régulation de débit de l'organe (9) d'alimentation en air de combustion,

 - et en ce que ledit organe (9) d'alimentation en air de combustion est un dispositif de soufflage d'air.

10. Dispositif selon l'une quelconque des revendications 6 à 9, caractérisé en ce que le moyen électronique (14, 15, 16) de calcul et de régulation comporte un régulateur PID (16), un calculateur électronique (14) et un sommateur (15).

**11.** Dispositif de captage des fumées d'un réacteur métallurgique du type comprenant une canalisation (3) de captage, une chambre de combustion (4) munie d'un organe (9) d'alimentation en air de combustion et une canalisation (5) d'évacuation des fumées, caractérisé en ce qu'il est muni d'un dispositif de régulation du débit de l'organe d'alimentation (9) d'air de combustion selon l'une quelconque des revendications 6 à 10.

**12.** Réacteur métallurgique équipé d'un dispositif selon la revendication 11.

**13.** Réacteur métallurgique selon la revendication 12 caractérisé en ce qu'il est constitué par un four à arc électrique étanche.

**Patentansprüche**

**1.** Verfahren zur Regelung des Verbrennungsluftdurchsatzes der Verbrennungskammer (4) einer Vorrichtung (1) zum Auffangen der Rauchgase eines metallurgischen Reaktors, insbesondere eines Lichtbogenofens (2), mit einer Auffangrohrleitung (3), einer Verbrennungskammer (4), einer mit einer Durchsatzregelung versehenen Verbrennungsluftversorgung (9) mit variablem Durchsatz und einer Abzugrohrleitung (5), wobei:

- ein Sollwert $C_0$ für den Sauerstoffgehalt in den Rauchgasen in der Abzugrohrleitung (5) am Ausgang der Verbrennungskammer (4) festgelegt wird,
- der Sauerstoffgehalt $M_1$ in den Rauchgasen am Ausgang der Verbrennungskammer (4) in der Rohrleitung (5) gemessen wird,
- mit Hilfe der Messung $M_1$ und des Sollwerts $C_0$ ein Sollwert $C_1$ der Schwankung des Verbrennungsluftdurchsatzes berechnet wird, der dazu tendiert, den Verbrennungsluftdurchsatz der Versorgung (9) so anzupassen, daß der Sauerstoffgehalt der Rauchgase am Ausgang der Verbrennungskammer (4) gleich $C_0$ ist, dadurch gekennzeichnet, daß
- darüber hinaus zumindest eine Größe gemessen wird, die es ermöglicht, eine plötzliche Schwankung des Durchsatzes an unverbrannten Gasen am Ausgang des metallurgischen Reaktors festzustellen und ein Sollwert $C_2$ des Verbrennungsluftdurchsatzes berechnet wird, der notwendig ist, um mindestens die vollständige Verbrennung der in den Rauchgasen enthaltenen unverbrannten Gase zu erhalten,
- und daß die Sollwerte $C_1$ und $C_2$ addiert werden, um einen Sollwert $C_3$ zu erhalten, der der Regelung der Vorrichtung (9) zur Versorgung mit Verbrennungsluft zugeführt wird.

**2.** Verfahren nach Anspruch 1, dadurch gekennzeichnet, daß die Größe, die die Ermittlung einer plötzlichen Schwankung des Durchsatzes an unverbrannten Gasen am Ausgang des metallurgischen Reaktors ermöglicht, der Druckunterschied $M_5$ zwischen dem Inneren und dem Äußeren des metallurgischen Reaktors ist, wobei der Sollwert $C_2$ bestimmt wird, indem die Ableitung nach der Zeit des Unterschieds $M_5$ berechnet wird, der Sollwert $C_2$ null ist, wenn diese Ableitung unter einer kritischen Schwelle $s_c$ liegt, der Sollwert $C_2$ gleich $k \times M_5$ ist, wenn der Differentialquotient $M_5$ über einer kritischen Schwelle $s_c$ liegt, und die Werte von $s_c$ und $k$ für jeden Reaktor experimentell bestimmt wurden.

**3.** Verfahren nach Anspruch 1, dadurch gekennzeichnet, daß die Größe, die die Ermittlung einer plötzlichen Schwankung des Durchsatzes an unverbrannten Gasen am Ausgang des metallurgischen Reaktors ermöglicht, der Gehalt $M_2$, ausgedrückt in %, an unvollständig verbrannten Gasen in den Rauchgasen am Ausgang des metallurgischen Reaktors in der Auffangrohrleitung (3) ist, und daß für die Bestimmung des Sollwerts $C_2$ Schwellen $s_1$, $s_2$, ..., $s_n$, die zwischen 0% und 100% gestaffelt sind, und Impulse mit einer Amplitude $a_1$, $a_2$, ..., $a_n$ und einer Dauer $t_1$, $t_2$ ..., $t_n$ verwendet werden, wobei, wenn der Meßwert $M_2$ zwischen $s_i$ und $s_{i+1}$ liegt, ein Impuls mit der Amplitude $a_i$ und der Dauer $t_i$ ausgesendet wird und die auf diese Weise ausgesendeten Impulse addiert werden.

**4.** Verfahren nach Anspruch 1, dadurch gekennzeichnet, daß zur Bestimmung des Sollwerts $C_2$ des Verbrennungsluftdurchsatzes:

- der Gehalt $M_2$ an unvollständig verbranntem Gas in den Rauchgasen am Ausgang des metallurgischen Reaktors in der Auffangrohrleitung (3) gemessen wird,
- der Durchsatz $M_3$ an Verbrennungsluft am Ausgang der Versorgung (9) mit Verbrennungsluft gemessen wird,

- der Durchsatz $M_4$ an Rauchgasen in der Abzugrohrleitung (5) am Ausgang der Verbrennungskammer (4) gemessen wird,
- mit Hilfe der Meßwerte $M_1$, $M_2$, $M_3$, $M_4$ und des Sollwerts $C_0$ der Sollwert $C_2$ für den Verbrennungsluftdurchsatz berechnet wird, der dem Luftdurchsatz entspricht, der notwendig ist, um eine vollständige Verbrennung der in den Rauchgasen enthaltenen unverbrannten Gase zu erreichen und am Ausgang der Verbrennungskammer einen Sauerstoffgehalt in den Rauchgasen zu erhalten, der gleich $C_0$ ist.

5. Verfahren nach Anspruch 4, dadurch gekennzeichnet, daß für die Berechnung des Sollwerts $C_2$ der Rauchgasdurchsatz am Ausgang des Ofens (2) berechnet wird, und zwar entweder durch die Überschlagsformel:

$$q_f = \left[1 - \frac{C_0}{100}\right] \times M_4 - 0,8 \times M_3$$

oder durch die genauere Formel:

$$q_f = \left[1 - \frac{M_1}{100}\right] \times M_4 - 0,8 \times M_3$$

und dann der notwendige Sauerstoffdurchsatz

$$q_{O2} = \alpha q_f \times \frac{M_2}{100} + \frac{C_0}{100} M_4$$

berechnet wird, wobei $\alpha$ ein stöchiometrischer Koeffizient gleich 0,5 ist, wenn das unverbrannte Gas Kohlenmonoxid ist, und der Sollwert $C_2$ des Verbrennungsluftdurchsatzes berechnet wird:

$$C_2 = q_{O2} \times \frac{1}{0,2}$$

6. Vorrichtung zur Regelung des Durchsatzes der Verbrennungsluftversorgung der Verbrennungskammer (4) einer Einheit (1) zum Rauchgasabzug in einem metallurgischen Reaktor, insbesondere einem Lichtbogenofen (2), mit einer Rauchgasauffangrohrleitung (3), die an den metallurgischen Reaktor angeschlossen ist, mit einer Verbrennungskammer (4), die die von der Auffangrohrleitung (3) ausgehenden Rauchgase aufnimmt und mit Verbrennungsluft versorgt wird, und zwar durch ein Versorgungsorgan, das mit einer Durchsatzregelung versehen ist, die an einem Eingang einen äußeren Sollwert empfangen kann, mit einem Mittel (10) zur Messung des Sauerstoffgehalts der Rauchgase in der Abzugrohrleitung (5) am Ausgang der Verbrennungskammer, das mit einem anderen Eingang der genannten Durchsatzregelung verbunden ist, und mit einer Rauchgasabzugrohrleitung (5), die in Serie mit der Verbrennungskammer montiert ist,
dadurch gekennzeichnet, daß die Vorrichtung darüber hinaus folgendes umfaßt:

- ein Mittel (12) zur Messung des Gehalts an unvollständig verbrannten Gasen am Ausgang des metallurgischen Reaktors vor dem Eingang in die Verbrennungskammer,
- und ein elektronisches Mittel (14, 15, 16) zur Berechnung und Regelung, das mit den Mitteln (10, 12) zur Messung des Sauerstoffgehalts und des Gehalts an unvollständig verbrannten Gasen sowie mit der Durchsatzregelung der Vorrichtung (9) zur Versorgung mit Verbrennungsluft verbunden ist, und daß das genannte Organ zur Versorgung der Verbrennungskammer mit Verbrennungsluft eine Vorrichtung zum Einblasen von Luft (9) ist.

7. Vorrichtung nach Anspruch 6, dadurch gekennzeichnet, daß diese darüber hinaus folgendes umfaßt:

- ein Mittel (11) zur Messung des Rauchgasdurchsatzes in der Abzugrohrleitung (5) am Ausgang der Verbrennungskammer,
- und ein Mittel (13) zur Messung des Verbrennungsluftdurchsatzes am Ausgang der Vorrichtung zur Verbrennungsluftversorgung,

wobei die genannten Mittel (11, 13) mit dem elektronischen Mittel (14, 15, 16) zur Berechnung und Regelung verbunden sind.

8. Vorrichtung nach einem der Ansprüche 6 und 7, dadurch gekennzeichnet, daß die Mittel (11, 13) zur Messung des Durchsatzes an Rauchgasen und Verbrennungsluft durch Pitot-Rohre gebildet werden.

9. Vorrichtung zur Regelung des Durchsatzes der Verbrennungsluftversorgung der Verbrennungskammer (4) einer Einheit (1) zum Rauchgasabzug in einem metallurgischen Reaktor, insbesondere einem Lichtbogenofen (2), mit einer Rauchgasauffangrohrleitung (3), die an den metallurgischen Reaktor angeschaltet ist, mit einer Verbrennungskammer (4), die die von der Auffangrohrleitung (3) kommenden Rauchgase aufnimmt und mit Verbrennungsluft versorgt wird, und zwar durch ein Versorgungsorgan, das mit einer Durchsatzregelung versehen ist, die an einem Eingang einen äußeren Sollwert empfangen kann, mit einem Mittel (10) zur Messung des Sauerstoffgehalts in den Rauchgasen in der Abzugrohrleitung (5) am Ausgang der Verbrennungskammer, das mit einem anderen Eingang der genannten Durchsatzregelung verbunden ist, mit einem Mittel (17) zur Messung des Druckunterschieds zwischen dem Äußeren und dem Inneren der Umschließung (8) des metallurgischen Reaktors, und mit einer Rauchgasabzugrohrleitung (5), die in Serie mit der Verbrennungskammer montiert ist, dadurch gekennzeichnet,

- daß sie darüber hinaus ein elektronisches Mittel (14, 15, 16) zur Berechnung und Regelung aufweist, das mit den Mitteln (10, 17) zur Messung des Sauerstoffgehalts und des Druckunterschieds verbunden ist und das auch mit der Durchsatzregelung des Organs (9) zur Verbrennungsluftversorgung verbunden ist,
- und daß das genannte Organ (9) zur Verbrennungsluftversorgung eine Vorrichtung zum Einblasen von Luft ist.

10. Vorrichtung nach einem der Ansprüche 6 bis 9, dadurch gekennzeichnet, daß das elektronische Mittel (14, 15, 16) zur Berechnung und Regelung einen PID-Regler (16), einen elektronischen Rechner (14) und eine Summiervorrichtung (15) umfaßt.

11. Vorrichtung zum Auffangen der Rauchgase in einem metallurgischen Reaktor mit einer Auffangrohrleitung (3), einer Verbrennungskammer (4), die mit einem Organ (9) zur Verbrennungsluftversorgung versehen ist, und einer Rauchgasabzugrohrleitung (5), dadurch gekennzeichnet, daß sie mit einer Vorrichtung zur Regelung des Durchsatzes des Organs (9) zur Verbrennungsluftversorgung nach einem der Ansprüche 6 bis 10 versehen ist.

12. Metallurgischer Reaktor, der mit einer Vorrichtung nach Anspruch 11 versehen ist.

13. Metallurgischer Reaktor nach Anspruch 12, dadurch gekennzeichnet, daß er durch einen dichten Lichtbogenofen gebildet wird.

## Claims

1. Method for regulating the combustion air flow rate of the combustion chamber (4) of a flue gas collection device (1) of a metallurgical reactor, in particular of an electric arc furnace (2), of the type comprising a collection duct (3), a combustion chamber (4), a variable flow rate combustion air supply (9) fitted with a flow rate regulation device and a discharge duct (5), according to which:

- a set value $C_0$ for the oxygen content in the flue gases in the discharge duct (5) at the outlet of the combustion chamber (4) is set,
- the oxygen content $M_1$ in the flue gases at the outlet of the combustion chamber (4) in the duct (5) is measured,
- using the measurement $M_1$ and the setting $C_0$, a setting $C_1$ for varying the combustion air flow rate, which tends to adjust the combustion air flow rate of the supply (9) so that the oxygen content of the flue gases at the outlet of the combustion chamber (4) is equal to $C_0$, is calculated,
- which method is characterised: in that at least one variable which makes it possible to detect a sudden variation of the flow rate of unburnt gases at the outlet of the metallurgical reactor is also measured, and a setting $C_2$ of the flow rate of the combustion air necessary to achieve at least complete combustion of the unburnt gases contained in the flue gases is calculated,
- and in that the settings $C_1$ and $C_2$ are added to obtain a setting $C_3$ which is sent to the regulation device of the combustion air supply device (9).

2. Method according to Claim 1, characterised in that the variable making it possible to detect a sudden variation of the flow rate of unburnt gases at the outlet of the metallurgical reactor is the pressure difference $M_5$ prevailing between the inside and the outside of the metallurgical reactor, the setting $C_2$ then being determined by calculating the derivative with respect to time of the difference $M_5$; if this derivative is less than a critical threshold $s_c$, the setting $C_2$ is zero, if the derivative $M_5$ is greater than the critical threshold $s_c$, the setting $C_2$ is equal to k $\times$ $M_5$, $s_c$ and k having values determined experimentally for each reactor.

3. Method according to Claim 1, characterised in that the variable making it possible to detect a sudden variation of the flow rate of unburnt gases at the outlet of the metallurgical reactor is the content $M_2$ expressed in % of incompletely burnt gases in the flue gases at the outlet of the metallurgical reactor in the collection duct (3), and in that, in order to determine the setting $C_2$, thresholds $s_1$, $s_2$, ..., $s_n$, stepped between 0% and 100% and pulses of amplitude $a_1$, $a_2$, ..., $a_N$ and of duration $t_1$, $t_2$, ..., $t_n$, are used; when the measurement $M_2$ lies between $s_i$ and $s_{i+1}$, a pulse of amplitude $a_i$ and of duration $t_i$ is emitted and the pulses thus emitted are added.

4. Method according to Claim 1, characterised in that, in order to determine the setting $C_2$ for the combustion air flow rate:

- the content $M_2$ of incompletely burnt gases in the flue gases at the outlet of the metallurgical reactor in the collection duct (3) is measured,
- the combustion air flow rate $M_3$ at the outlet of the combustion air supply (9) is measured,
- the flow rate $M_4$ of flue gas in the discharge duct (5) at the outlet of the combustion chamber (4) is measured;
- using the measurements $M_1$, $M_2$, $M_3$, $M_4$ and the setting $C_0$, the setting $C_2$ for the combustion air flow rate corresponding to the air flow rate necessary to achieve complete combustion of the unburnt gases contained in the flue gases and to have at the outlet of the combustion chamber an oxygen content in the flue gases equal to $C_0$ is calculated.

5. Method according to Claim 4, characterised in that, in order to calculate the setting $C_2$, the flow rate of flue gases at the outlet of the furnace (2) is calculated, either by the approximate formula:

$$q_f = (1 - \frac{C_0}{100}) \times M_4 - 0.8 \times M_3$$

or by the more accurate formula:

$$q_f = (1 - \frac{M_1}{100}) \times M_4 - 0.8 \times M_3$$

then the oxygen flow rate necessary is calculated

$$q_{O2} = \alpha q_f \times \frac{M_2}{100} + \frac{C_0}{100} M_4$$

where $\alpha$ is a stoichiometric coefficient equal to 0.5 when the unburnt gas is carbon monoxide, and the setting $C_2$ for the combustion air flow rate is calculated

$$C_2 = q_{O2} \times \frac{1}{0.2}.$$

6. Device for regulating the flow rate of the combustion air supply of the combustion chamber (4) of a flue gas discharge assembly (1) of a metallurgical reactor, in particular of an electric arc furnace (2) comprising a flue gas collection duct (3) connected to the metallurgical reactor, a combustion chamber (4) receiving the flue gases coming from the collection duct (3) and supplied with combustion air by a supply member fitted with a flow rate regulation device capable of receiving an outside setting on one inlet, a means (10) for measuring the oxygen content in the flue gases in the discharge duct (5) at the outlet of the combustion chamber connected to another inlet of the said flow rate regulation device, a flue gas discharge duct (5) mounted in series on the combustion chamber, which device is characterised in that it also comprises:

- a means (12) for measuring the content of incompletely burnt gases at the outlet of the metallurgical reactor before entering the combustion chamber,
- an electronic calculation and regulation means (14, 15, 16) connected to the means for measuring the oxygen content, the content of incompletely burnt gases, and to the flow rate regulation device of the combustion air supply device (9),
- and in that the said member for supplying the combustion chamber with combustion air is an air-blowing device (9).

7. Device according to Claim 6, characterised moreover by:

- a means (11) for measuring the flow rate of the flue gases in the discharge duct (5) at the outlet of the combustion chamber,
- a means (13) for measuring the flow rate of combustion air at the outlet of the combustion air supply device, said means (11, 13) being connected to the electronic calculation and regulation means (14, 15, 16).

8. Device according to either Claim 6 or 7, characterised in that the means (11, 13) for measuring the flow rate of the flue gases and of the combustion air consists of Pitot tubes.

9. Device for regulating the flow rate of the combustion air supply of the combustion chamber (4) of a flue gas discharge assembly (1) of a metallurgical reactor, in particular of an electric arc furnace (2), comprising a flue gas collection duct (3) connected to the metallurgical reactor, a combustion chamber (4) receiving the flue gases coming from the collection duct (3) and supplied with combustion air by a supply member fitted with a flow rate regulation device capable of receiving an outside setting on one inlet, a means (10) for measuring the oxygen content in the flue gases in the discharge duct (5) at the outlet of the combustion chamber connected to another inlet of the said flow rate regulation device, a means (17) for measuring the pressure difference between the outside and the inside of the enclosure (8) of the metallurgical reactor, and a flue gas discharge duct (5) mounted in series on the combustion chamber, which device is characterised in that it also comprises an electronic calculation and regulation means (14, 15, 16) connected to the means (10, 17) for measuring the oxygen content and the pressure difference and also connected to the flow rate regulation device of the combustion air supply member (9),

- and in that the said member (9) for supplying the combustion chamber with combustion air is an air-blowing device.

10. Device according to any one of Claims 6 to 9, characterised in that the electronic calculation and regulation means (14, 15, 16) comprises a PID regulator (16), an electronic calculator (14) and a summing integrator (15).

11. Device for collecting the flue gases of a metallurgical reactor of the type comprising a collection duct (3), a combustion chamber (4) fitted with a combustion air supply member (9) and a flue gas discharge duct (5), which is fitted with a device for regulating the flow rate of the combustion air supply member (9) according to any one of Claims 6 to 10.

12. A metallurgical reactor equipped with a device according to Claim 11.

13. The metallurgical reactor according to Claim 12, which consists of a leaktight electric arc furnace.

EP 0 561 723 B1

_14_

_15_  _16_

9

_4_

3

10

5

6

1

7  17

8

2

FIG.1

FIG. 2

FIG.3